# EUROPÄISCHE PATENTSCHRIFT

(11) **EP 3 938 158 B1**
(45) Veröffentlichungstag und Bekanntmachung des Hinweises auf die Patenterteilung: **18.03.2026**
(21) Anmeldenummer: 20701536.3
(22) Anmeldetag: 09.01.2020
(51) Int. Cl.: B27N 1/00, B27N 3/00, B27N 3/04, C08L 97/02

(54) **PLATTENFÖRMIGER WERKSTOFF UND VERFAHREN ZU DESSEN HERSTELLUNG**
PLATE-SHAPED MATERIAL AND METHOD FOR ITS MANUFACTURE
MATÉRIAU SOUS FORME DE PLAQUE ET SON PROCÉDÉ DE FABRICATION

(30) Priorität: 18.04.2019 EP 19170159; 02.07.2019 EP 19183998
(43) Veröffentlichungstag der Anmeldung: 19.01.2022
(73) Patentinhaber: SWISS KRONO Tec AG, 6004 Luzern (CH)
(72) Erfinder: BRAUN, Roger, 6130 Willisau (CH); HASCH, Joachim, 10317 Berlin (DE); SCHWIND, Volker, 10407 Berlin (DE); KALWA, Norbert, 32805 Horn - Bad Meinberg (DE)
(74) Vertreter: Kalkoff & Partner Patentanwälte mbB
(86) Internationale Anmeldenummer: PCT/EP2020/050451
(87) Internationale Veröffentlichungsnummer: WO 2020/211988

(56) Entgegenhaltungen:
- WO-A1-2011/107900
- WO-A1-2016/071007
- CN-A- 109 249 491
- DE-A1- 102007 041 438
- US-A- 5 985 429
- US-A1- 2004 235 983
- US-A1- 2007 042 664

## Beschreibung

Die Erfindung betrifft einen plattenförmigen Werkstoff und ein Verfahren zu dessen Herstellung sowie die Verwendung des plattenförmigen Werkstoffs.

Plattenförmige Werkstoffe aus lignocellulosischen Fasern werden vielfältig eingesetzt, weil ihre Herstellung preiswert und technisch ausgereift ist. Typisch ist z. B. der Einsatz von hochdichten Faserplatten (HDF), wobei Holzfasern unter Einsatz von Bindemitteln zu Platten verpresst werden, die anschließend meist mit kunstharzgetränkten Papieren beschichtet werden. Diese Beschichtung härtet unter Einwirkung von Druck und Temperatur aus, so dass sich ein fest verbundenes Laminat bildet. Dieses Laminat wird zerteilt und die Teile werden an den Kanten profiliert, z. B. um als leimlos verlegter Fußbodenbelag eingesetzt zu werden. An den profilierten Kanten liegt der Werkstoff jedoch frei. In Gegenwart von Wasser beginnen an den freiliegenden Kanten die Holzfasern infolge von Wasseraufnahme zu quellen, was zu einer Formänderung der Holzwerkstoffplatte führt. Als Wasser kann dabei entweder frei fließendes Wasser oder auch schon hohe Luftfeuchte gelten. Eine hohe Luftfeuchte, die z. B. jahreszeitlich bedingt oder technisch verursacht sein kann, kann der Verwendung von Laminat entgegenstehen, auch wenn Quellung weitgehend reversibel ist, so dass die Quellung durch Trocknung zum überwiegenden Teil rückgängig gemacht werden kann. Eine Quellung kann jedoch nicht vollständig reversibel gemacht werden, so dass nach einer ersten Quellung eine unschöne offene Fuge verbleibt.

Alternativen zu Laminat sind Wood Plastic Composites (WPC), eine extrudierte Mischung aus Holzfasern und Kunststoff, die z. B. in der DE 10 2007 041 438 A1, der US 5,985,429 A, der CN 109249491 A1 und der US 2004/0235983 A1 beschrieben werden. Bei ausreichend hohem Anteil an Kunststoff ist ein WPC unter Wasser- bzw. Feuchtigkeitseinfluss dimensionsbeständig. Allerdings erfordert die Herstellung den Einsatz von

Extrudern, die nicht zur Herstellung von plattenförmigen Werkstoffen größerer Abmessungen geeignet sind.

Schließlich sind Werkstoffe verfügbar, aus denen nicht-quellende plattenförmige Werkstoffe hergestellt werden können, die keine Holzfasern oder andere Holzbestandteile enthalten. Sie verzichten damit auf einen nachwachsenden, in großer Menge verfügbaren Rohstoff, der gute Festigkeitseigenschaften aufweist. Hier sind z. B. Stone Plastic Composites (SPC) oder Polyvinylchlorid (PVC) als Rohstoffe zu nennen. Hier werden in der Regel Halogene oder auch Terephthalate eingesetzt, so dass diese Produkte unter Umweltüberlegungen nachteilig sind. Der erfindungsgemäße plattenförmige Werkstoff ist emissionsarm oder emissionsfrei; insbesondere die Emission von Formaldehyd kann weitgehend reduziert oder vermieden werden, so dass die Auflagen des Staates Kalifornien zur Formaldehydemission CARB 2 eingehalten werden können. Auch flüchtige organische Stoffe (VOC volatile organic compounds) können weitgehend oder vollständig vermieden werden.

Weiter lehrt die WO 2011/107900 A1 einen in der Quellung reduzierten, plattenförmigen Werkstoff, der Bindemittel und daneben Fasern und expandierte Partikel aufweist. Das Herstellungsverfahren ist komplex und der Werkstoff weist zahlreiche Komponenten auf.

Es ist Aufgabe der Erfindung, einen plattenförmigen Werkstoff und ein Verfahren zu seiner Herstellung bereitzustellen, der unter Nutzung von Fasern eine reduzierte Quellung aufweist.

Die Lösung dieser Aufgabe erfolgt durch ein Verfahren nach Anspruch 1 und einen plattenförmigen Holzwerkstoff 10. Die Verwendung des plattenförmigen Werkstoffs nach der Erfindung ist in Anspruch 19 erfasst.

Die Erfindung betrifft einen plattenförmigen Werkstoff, aufweisend Fasern und Bindemittel, dadurch gekennzeichnet, dass der Anteil des Bindemittels bezogen auf den plattenförmigen Werkstoff mehr als 50 Gew.-% beträgt. Fasern im Sinne dieser Erfindung sind Feststoffpartikel, die langgestreckt sind, d. h., deren Durchmesser um ein Vielfaches geringer ist als die längste Dimension des Partikels. Die Abmessungen der Fasern können in einem weiten Rahmen gewählt werden; sie richten sich insbesondere nach der Plattendicke und nach den Vorgaben für die Homogenität des plattenförmigen Werkstoffs. Der Durchmesser der Fasern beträgt von 10 µm bis 5 mm, die Länge der Fasern von 0,05 mm bis 100 mm. Der plattenförmige Werkstoff weist also einen größeren Anteil an Bindemittel als an Fasern auf. Der Bindemittelanteil kann auch bezogen auf Fasern ausgedrückt werden, das heißt, der Anteil des Bindemittels wird angegeben mit Bezug auf das Gewicht der eingesetzten Fasern. Bei hygroskopischen Fasern, die Feuchtigkeit aufnehmen können (z. B. lignocellulosische Fasern), wird der Anteil der Fasern als bis zur Gewichtskonstanz getrocknete Fasern angegeben, meist bei 105 °C bis zur Gewichtskonstanz getrocknete Fasern (atro Fasern: absolut trockene Fasern). Der Bindemittelanteil an dem plattenförmigen Werkstoff beträgt dann, bezogen auf den Anteil an Fasern, mehr als 100 Gew.-%.

Für den erfindungsgemäßen plattenförmigen Werkstoff können organische oder anorganische Fasern eingesetzt werden. Natürliche Fasern, z. B. lignocellulosische Fasern, Baumwoll- oder Leinenfasern oder synthetische Fasern wie beispielsweise Fasern aus thermoplastischem Material wie Polyethylen oder Polypropylen, aber auch aus Polycarbonat, Polyacrylat, Polymethacrylat oder Polyurethan können zur Herstellung des erfindungsgemäßen Werkstoffs eingesetzt werden. Anorganische Fasern wie Carbonfasern oder Fasern aus mineralischem oder keramischem Rohstoff oder Glasfasern sind insbesondere in Mischung mit anderen Fasern geeignet zur Herstellung des plattenförmigen Werkstoffs. Insbesondere können Mischungen von Fasern, insbesondere Mischungen der vorgenannten Fasern, zur Herstellung des erfindungsgemäßen Werkstoffs eingesetzt werden. Mischungen von Fasern ermöglichen das Einstellen von Eigenschaften des erfindungsgemäßen Werkstoffs, z. B. der Elastizität oder der Biegeeigenschaften, der Formstabilität, der Festigkeit, aber auch der Herstellungseigenschaften bzw. der Verarbeitbarkeit. Werden Fasern aus nachwachsenden Rohstoffen, insbesondere lignocellulosische Fasern, z. B. Fasern aus Holz, Bambus oder Einjahrespflanzen eingesetzt, so stehen preiswerte, einfach zu verarbeitende Fasern zur Verfügung. Natürliche Faser werden bevorzugt unbehandelt eingesetzt, d. h., die Faserkomponenten Cellulose und Lignin sowie ggf. Hemicellulosen sind, nicht in ihren Eigenschaften durch chemische Verfahren verändert. Der Einsatz hygroskopischer Fasern ist nicht ausgeschlossen, insbesondere sofern diese vor dem Herstellen bzw. Verpressen des erfindungsgemäßen Werkstoffs mindestens teilweise getrocknet werden.

Die vorstehend erwähnten lignocellulosischen Fasern umfassen insbesondere sämtliche Fasern, die durch chemische oder physikalische Verfahren aus Pflanzen gewonnen wurden. Typische Beispiele für physikalisch gewonnene Fasern sind Nadelholzfasern, Laubholzfasern oder Bambusfasern, oder Fasern aus anderen organischen Rohstoffen, die durch mechanische Zerfaserung gewonnen wurden. Ein Beispiel für chemisch gewonnene Fasern sind z. B. Zellstofffasern aus Holz, Einjahrespflanzen oder anderen Rohstoffen, insbesondere nachwachsenden Rohstoffen. Besonders typisch werden Holzfasern aus mechanischer Zerfaserung eingesetzt, wobei angestrebt wird, den Verlust an Lignin und Hemicellulosen möglichst zu minimieren. Auch Mischungen von Fasern können eingesetzt werden, insbesondere um Eigenschaften des Werkstoffs (Festigkeitseigenschaften, Gewicht) einzustellen, aber auch um den Rohstoff Faser kostenoptimiert einzusetzen. Fasern im Sinne dieser Erfindung sind auch Faserbündel; eingeschlossen sind auch kleinere Späne, soweit deren Fasern noch weitgehend mit Bindemittel beschichtet werden können.

Der erfindungsgemäße Werkstoff ist plattenförmig, d. h, er weist in der Regel zwei Hauptflächen auf, die im Folgenden auch als Ober- und Unterseite bezeichnet werden. Zwischen Ober- und Unterseite sind die Schmalflächen oder Kanten des Werkstoffs angeordnet. Die Dicke des fertigen plattenförmigen Werkstoffs kann von 0,8 mm bis 500 mm betragen, typischerweise zwischen 1 mm und 80 mm, meist zwischen 3 mm und 30 mm. Eine typische Anwendung kann eine Dicke des plattenförmigen Werkstoffs von 4 mm bis 10 mm erfordern, insbesondere zwischen 4 mm und 7 mm. Der erfindungsgemäße Werkstoff kann ebene Hauptflächen aufweisen, die Ober- und/oder Unterseite können aber auch geprägt oder gefräst oder in anderer Weise bearbeitet sein, so dass sich, bezogen auf die Fläche des Werkstoffs, eine variable Dicke des Werkstoffs ergibt. Der Werkstoff weist bevorzugt eine über die Dicke im Wesentlichen homogene Zusammensetzung auf. Die Kanten, deren Höhe der Dicke des Werkstoffs entspricht, können mit üblichen Werkzeugen bearbeitet werden. Sie können gesägt, geschnitten oder gefräst werden. Der erfindungsgemäße plattenförmige Werkstoff ist in seiner maximalen Länge und Breite allein durch verfügbare Pressen begrenzt, die zur Herstellung des Werkstoffs eingesetzt werden. Kleinere Abmessungen können durch Zerlegen des plattenförmigen Werkstoffs hergestellt werden. Typische Abmessungen des plattenförmigen Werkstoffs können sein 5600 mm (Länge) x 2070 mm (Breite) nach Herstellung in der Presse, 1380 mm x 195 mm, nach Aufteilen in Boden-, Wand- oder Deckenpaneele oder 3048 mm x 2800 mm. Letzteres Format eignet sich besonders gut zur Verwendung im Bau, weil die Breite der Platte Geschosshöhe aufweist.

Der erfindungsgemäße plattenförmige Werkstoff kann vielseitig eingesetzt werden. Er kann z. B. eingesetzt werden als Fußboden-, Decken- und/oder Wandbelag, zur Herstellung von Innenausbauten oder Möbeln, insbesondere auch für den Innenausbau von Fahrzeugen wie z. B. Fahrzeugkabinen, aber auch im Außenbereich, sowohl als Verkleidung, z. B. als vorgehängte Fassade, als auch für konstruktive Verwendungen. Der plattenförmige Werkstoff nach der Erfindung kann beschichtet, gefärbt, lackiert oder in anderer Weise dekorativ gestaltet werden. Insbesondere Oberflächenbeschichtungen, wie sie z. B. aus dem Bereich der Holzwerkstoffe bekannt sind, können auf die Oberfläche des erfindungsgemäßen Werkstoffs aufgebracht werden. Des Weiteren kann der erfindungsgemäße plattenförmige Werkstoff als ein Bestandteil einer Sandwichplatte eingesetzt werden, d. h, dass der erfindungsgemäße Werkstoff mit gleichen oder anderen folien- oder plattenförmigen Werkstoffen, insbesondere Holzwerkstoffplatten, aber auch Kunststoffplatten oder -folien zu einer Sandwichplatte verbunden werden.

Der erfindungsgemäße Werkstoff unterscheidet sich von dem vorstehend beschriebenen WPC dadurch, dass nicht Kunststoff, insbesondere thermoplastischer Kunststoff mit Fasern zu einem plattenförmigen Werkstoff geformt wird, sondern dass ein Bindemittel eingesetzt wird, das eine kohäsive und/oder adhäsive Wechselwirkung mit den Fasern eingeht. Solche Bindemittel sind beispielsweise aus der Holzwerkstoffherstellung nach dem Stand der Technik bekannt. Das erfindungsgemäß eingesetzte Bindemittel weist vorzugsweise Melamin auf. Melamin wird in wässriger Lösung als Melaminharz eingesetzt, wobei der Feststoffgehalt des Melamins bevorzugt mindestens 45 Gew.-% bezogen auf die wässrige Lösung beträgt, vorteilhaft beträgt der Feststoffgehalt über 50 Gew.-%. Die Obergrenze des Feststoffgehalts wird durch die Löslichkeit und ggf. Verarbeitbarkeit des Melamins z. B. in Sprühdüsen vorgegeben. Melamin wird als Bindemittel bevorzugt, weil es sich als nicht-quellend und nicht-hygroskopisch sowie als beständig gegen Hydrolyse erweist. Melamin kann entweder allein als Bindemittel eingesetzt werden oder in Kombination mit einem oder mehreren anderen Bindemitteln. In Kombination bedeutet im Zusammenhang mit dieser Erfindung, dass Mischungen von Bindemitteln eingesetzt werden können, wobei entweder die Mischung von zwei oder mehr Bindemitteln gleichzeitig auf die Faser aufgebracht wird, z. B. als MF-Harz (MelaminFormaldehyd-Harz). Oder es wird eine Kombination von Bindemitteln eingesetzt, die nacheinander eingesetzt werden, z. B. weil sie nicht in Mischung eingesetzt werden können oder weil ein getrenntes Auftragen von verschiedenen Bindemitteln vorteilhafte Wirkung hat. In Kombination mit dem vorstehend genannten Melamin oder alternativ dazu können weitere Bindemittel wie z. B. Formaldehyd, Methylendiphenylisocyanat (MDI), auch in emulgierter Form als eMDI oder polymerem Diphenylmethandiisocyanat (PMDI), aber auch Polyurethan eingesetzt werden. Phenolharz ist zwar wasserfest, aber dunkelfarbig, was in der Anwendung nachteilig ist. Wie vorstehend beschrieben können auch zwei oder mehr Bindemittel in Kombination eingesetzt werden. Es wird bevorzugt, wenn das Bindemittel überwiegend Melamin aufweist. Es wird weiter bevorzugt, wenn der Anteil von Melamin am Bindemittel 20 Gew.-%, insbesondere 50 Gew.-% übersteigt. Bevorzugt ist das Bindemittel harnstofffrei, da Harnstoff zur Hygroskopizität und damit zur Quellung der lignocellulosischen Fasern beiträgt bzw. diese nicht verhindert. Vorteilhaft werden thermoplastische Bindemittel vermieden. Der erfindungsgemäße plattenförmige Werkstoff ist bevorzugt frei von Halogenen (z. B. Fluor, Chlor), aber auch von Terephthalaten.

Der plattenförmige Werkstoff wird erfindungsgemäß durch den Zusatz eines Elastomers oder Thermoplasten, der als elastifizierender Zusatz eingesetzt wird, z. B. durch Zusatz von Polyvinylacetat (PVAc) oder Ethyl-Vinyl-Acetat in seinen elastischen Eigenschaften modifiziert, insbesondere verbessert werden. Acrylat, Styrolacrylat oder Polyurethan (PU) werden bevorzugt zum Elastifizieren des erfindungsgemäßen plattenförmigen Werkstoffs eingesetzt, insbesondere in Form eines flüssigen Zusatzes wie z. B. einer Dispersion, weil sie wasserfest sind. Bevorzugt werden Acrylat, Styrolacrylat und PU mit einer Glasübergangstemperatur von TG kleiner 0 °C eingesetzt. Aber auch Mono- oder Diethylenglykol sind zum Elastifizieren des plattenförmigen Werkstoffs geeignet. Die vorstehend genannten elastifizierenden Zusätze können jeweils für sich allein, aber auch in Mischung eingesetzt werden. Der Zusatz von Elastomeren oder Thermoplasten reduziert die Sprödigkeit des plattenförmigen Werkstoffs und verbessert die elastischen Eigenschaften des erfindungsgemäßen plattenförmigen Werkstoffs, z. B. den E-Modul. Außerdem bewirkt der Zusatz von elastifizierenden Zusätzen ein besseres Planliegen des plattenförmigen Werkstoffs. Der elastifizierende Zusatz wird als Feststoff berechnet anteilig bezogen auf die Menge des Feststoffs des eingesetzten Kunstharzes eingesetzt. Der elastifizierende Zusatz wird, bezogen auf das Kunstharz, in einem Verhältnis von 1:1, bevorzugt von 0,7:1, insbesondere von 0,2:1, vorteilhaft 0,01:1 eingesetzt. Der elastifizierende Zusatz wird also nicht als Hauptbestandteil des Bindemittels eingesetzt, vor allem nicht als mengenmäßiger Hauptbestandteil. Die elastifizierenden Zusätze werden beispielsweise dem Bindemittel, z. B. Melaminharz, vor dem Auftragen auf die Fasern zugesetzt und gemeinsam mit dem Bindemittel auf die Fasern aufgetragen. Alternativ kann das Mittel zum Elastifizieren vor oder nach dem Bindemittel auf die Fasern aufgetragen werden.

Das Bindemittel, ergänzt durch den elastifizierenden Zusatz, bildet den größten Anteil des plattenförmigen Werkstoffs nach der Erfindung, meist den überwiegenden Anteil am erfindungsgemäßen Werkstoff. Bevorzugt weist der plattenförmige Werkstoff, bezogen auf den Faseranteil, mehr als 100 Gew.-%, z. B. 101 Gew.-% oder 102 Gew.-% bis zu 120 Gew.-% Bindemittel auf, vorteilhaft weist der Werkstoff mehr als 150 Gew.-% Bindemittel, besonders bevorzugt mehr als 200 Gew.-% Bindemittel, maximal 500 Gew.-% Bindemittel, jeweils bezogen auf den Faseranteil auf.

Die Dichte des erfindungsgemäßen Werkstoffs beträgt erfindungsgemäß zwischen 1.000 kg/m³ und 1.800 kg/m³, insbesondere zwischen 1.000 kg/m³ und 1.600 kg/m³, vorteilhaft zwischen 1.000 kg/m³ und 1.300 kg/m³, besonders vorteilhaft zwischen 1.030 kg/m³ und 1.200 kg/m³. Der erfindungsgemäße Werkstoff zeigt, bedingt durch den hohen Einsatz an Bindemittel, gegenüber z. B. einem Holzwerkstoff, z. B. einer HDF-Platte, die mengenmäßig überwiegend lignocellulosische Fasern aufweist, ein höheres Gewicht, z. B. zwischen 1.000 kg/m³ und 1.200 kg/m³.

Bevorzugt weist der Werkstoff Füllstoffe auf. Füllstoffe können als Zuschlagstoff dazu beitragen, das Gewicht des plattenförmigen Werkstoffs zu optimieren, meist zu minimieren oder die Matrixstruktur aus Bindemittel und Fasern weiter zu verbessern. Ein Zuschlagstoff oder eine Kombination aus Zuschlagstoffen können alternativ oder ergänzend dazu dienen, bestimmte Eigenschaften der Platten zu optimieren, z. B. Leitfähigkeit, isolierende Eigenschaften oder Festigkeitseigenschaften. Ein Zuschlagstoff ersetzt im erfindungsgemäßen Werkstoff Fasern. Da der Werkstoff in Gegenwart von Wasser eine minimale Quellung, insbesondere eine minimierte Dickenquellung aufweisen soll, werden nicht-hygroskopische oder nicht-quellende Zuschlagstoffe sowie Zuschlagstoffe bevorzugt, die beständig gegen Hydrolyse sind. Solche Zuschlagstoffe können mineralische Partikel sein, aber auch keramische, synthetische oder Partikel aus Glas. Weiter können als Zuschlagstoffe Calciumcarbonat (CaCO3) und/oder Schwerspat (BaSO4) eingesetzt werden. Die Größe der Partikel ist bevorzugt nicht größer als ein Millimeter, vorzugsweise zwischen 10 µm und 800 µm. Es können auch Mischungen verschiedener Partikel eingesetzt werden, z. B. Mischungen verschiedener Materialien oder Größe. Es werden bis zu 30 Gew.-% bezogen auf das Gesamtgewicht des plattenförmigen Werkstoffs eingesetzt, besonders bevorzugt bis zu 20 Gew.-%, vorteilhaft bis zu 15 Gew.-%. Die untere Grenze der Einsatzmenge ergibt sich durch die Nachweisbarkeit eines Zuschlagstoffs. Der Zuschlagstoff kann vor oder nach dem Auftragen des Bindemittels auf die Fasern aufgebracht werden, bevorzugt durch Sprühen.

Gemäß einer vorteilhaften Ausführung der Erfindung weist der plattenförmige Werkstoff Hydrophobierungsmittel auf, z. B. Paraffin oder Wachs, die typischerweise in Mengen von bis zu 5 Gew.-% bezogen auf das Gewicht des plattenförmigen Werkstoffs eingesetzt werden, meist in Mengen von bis zu 2 Gew.-%, oft in einer Menge von 0,1 Gew.-% bis 1 Gew.-%. Auch der Einsatz von Hydrophobierungsmitteln trägt zu einer Reduzierung der Quellungsneigung des plattenförmigen Werkstoffs bei.

Die Erfindung betrifft weiter ein Verfahren zum Herstellen eines plattenförmigen Werkstoffs, aufweisend Fasern und Bindemittel, wobei der Anteil des Bindemittels am plattenförmigen Werkstoff mehr als 50 Gew.-% beträgt, mit den Schritten:
- Bereitstellen von Fasern,
- Bereitstellen des Bindemittels, bevorzugt in flüssiger Form,
- Auftragen des Bindemittels auf die Fasern,
- Formen eines Faserkuchens,
- Verpressen des Faserkuchens in einer Presse unter Aushärten des Bindemittels zum Erzeugen eines plattenförmigen Werkstoffs.

Die Schritte des Verfahrens entsprechen denen eines konventionellen Verfahrens z. B. zum Herstellen einer Holzwerkstoffplatte in einer Presse. Erfindungsgemäß wird jedoch eine größere Menge an Bindemittel eingesetzt als bisher bekannt, so dass der Gewichtsanteil des Bindemittels größer ist als der Gewichtsanteil der Fasern.

Werden synthetische oder anorganische Fasern eingesetzt, kann es erforderlich sein, das Bindemittel auf den Fasern mindestens teilweise zu trocknen. Weisen die Fasern Feuchtigkeit auf, so wie es z. B. für lignocellulosische Fasern üblich ist, sollte der Feuchtegehalt vor dem Verpressen des Faserkuchens so eingestellt werden, dass nach dem Verpressen eine formstabile, nicht quellende oder schwindende Platte vorliegt. Die lignocellulosischen Fasern werden vor der Beleimung oft mit einer Feuchte von bis zu 120 Gew.-% oder mehr eingesetzt. Die lignocellulosischen Fasern können vor oder nach dem Aufbringen von Bindemittel getrocknet werden. Beim Verpressen ist es bevorzugt, wenn die lignocellulosischen Fasern eine Feuchte von minimal 3 Gew.-% bis maximal 15 Gew.-% aufweisen, das heißt, mit einem Wassergehalt von mindestens 3 Gew.-% bis zu 15 Gew.-% bezogen auf das Gesamtgewicht der Fasern.

Das Bindemittel wird in der Regel in flüssiger Form bereitgestellt. Es kann in reiner Form bereitgestellt werden oder -was die Regel ist- in Lösung, entweder in Lösemittel oder in Wasser oder als Dispersion bzw. Emulsion. Das Auftragen des Bindemittels auf die lignocellulosischen Fasern erfolgt meist durch Sprühen, z. B. durch eine Mehrzahl von Sprühdüsen, die einen Sprühnebel des Bindemittels erzeugen und die um einen Abwärtsstrom von Fasern herum angeordnet sind. Eine typische Ausführung für eine solche Trockenvorrichtung ist z. B. eine Blowline, die bei der Faserplattenherstellung eingesetzt wird. Die Oberfläche der Fasern wird mit Bindemitteltröpfchen bzw. durch einen Bindemittelnebel benetzt. Die mit Bindemittel benetzten Fasern werden, nachdem sie optional getrocknet wurden, zu einem Faserkuchen geformt und verpresst. Dabei härtet das Bindemittel aus, so dass ein plattenförmiger Werkstoff entsteht. Beim Aushärten, das unter Einwirkung von Druck und Temperatur im Wesentlichen auf die Ober- und Unterseite des Faserkuchens erfolgt, werden, anders als bei WPC-Produkten, irreversible chemische Bindungen zwischen Fasern und Bindemittel, aber auch innerhalb des Bindemittels aufgebaut. Das erfindungsgemäße Verfahren vermeidet den Aufwand des Knetens und des Extrudierens.

Es hat sich überraschenderweise herausgestellt, dass die Pressbedingungen insbesondere denen bekannter Holzwerkstoffe mit einem gegenüber der Erfindung verringerten Anteil von Bindemittel im Wesentlichen gleich sind. Druck und Temperatur sowie Pressdauer liegen z. B. im Bereich üblicher HDF-Platten (Hochdichter Faserplatten). Der erfindungsgemäße Werkstoff lässt sich ausgezeichnet in Pressen herstellen, wie sie für die Herstellung von Holzwerkstoffen eingesetzt werden. Insbesondere sind kontinuierliche oder diskontinuierliche Heißpressen, z. B. kontinuierliche Doppelbandpressen mit umlaufenden, beheizten Metallbändern oder taktweise arbeitenden Pressen. Damit lassen sich Plattenformate herstellen, die -anders als bei WPC- nicht auf die Herstellung schmaler Dielenformate mit einer Breite von ca. 30 cm limitiert sind. Vielmehr können konventionelle Plattenformate bereitgestellt werden, wie sie für Holzwerkstoffplatten üblich sind.

Das Herstellen des Faserkuchens erfolgt, wie bei Holzwerkstoffen üblich, in der Regel durch Streuen. Die mit der gesamten Menge des Bindemittels entweder frisch beleimten oder vorzugsweise getrockneten Fasern werden auf einen Träger, meist auf ein Förderband, gestreut, meist in einer homogenen Schicht, aber alternativ auch in mehreren Schichten, wobei die Schichten eine unterschiedliche Zusammensetzung hinsichtlich Fasern, Bindemittel oder Additiven aufweisen können. Der gestreute Faserkuchen wird auf dem Träger ggf. zuerst durch eine Vorpresse geführt und dann in einer Presse verpresst. Die Presse wirkt dabei auf die Ober- und Unterseite des Faserkuchens bzw. des plattenförmigen Werkstoffs ein.

Jede Presse, die in ausreichender Weise Druck und Temperatur aufbringt, ist geeignet, sowohl eine Plattenpresse, in der der Werkstoff zwischen zwei Blechen verpresst wird, als auch insbesondere eine kontinuierliche Presse, in der der Werkstoff zwischen zwei umlaufenden Metallbändern gepresst wird. Bevorzugt werden Heißpressen eingesetzt, deren Pressbleche oder umlaufende Metallbänder auf eine vorgegebene Temperatur aufgeheizt sind. Geeignete Presstemperaturen können von 140 °C bis 220 °C, bevorzugt von 160 °C bis 180 °C gewählt werden. Je dünner die Platte, desto niedriger kann die Presstemperatur gewählt werden. Geeignete Pressdrücke liegen beispielsweise in einem Bereich von 0,3 N/mm² bis 5,5 N/mm², insbesondere 1 N/mm² bis 3 N/mm². Die Pressdauer beträgt vorteilhaft 6 Sekunden/mm Plattendicke (im Folgenden: s/mm) bis 60 s/mm, meist 10 s/mm bis 20 s/mm. Bei kontinuierlichen Pressen beträgt die Vorschubgeschwindigkeit der umlaufenden Metallbänder, zwischen denen der plattenförmige Werkstoff durch Verpressen hergestellt wird, meist zwischen 350 mm/Sekunde und 400 mm/Sekunde.

Dem eigentlichen Pressvorgang kann eine Vorpresse zum Verdichten des Faserkuchens vorgeschaltet sein. Optional kann der Presse eine Vorrichtung zum Abkühlen des plattenförmigen Werkstoffs nachgeschaltet sein, insbesondere eine Vorrichtung zum Abkühlen unter einem vorgegebenen Pressdruck, der geringer sein kann als der Pressdruck während des Pressens des Werkstoffs.

Dem erfindungsgemäßen Werkstoff können die vorstehend beschriebenen Zuschlagstoffe, Nassfestmittel oder Hydrophobierungsmittel zugesetzt werden, typischerweise vor oder während des Formens des Faserkuchens.

Der nach dem erfindungsgemäßen Verfahren hergestellte Werkstoff hat bevorzugt eine Oberfläche, die im Wesentlichen Bindemittel und den elastifizierenden Zusatz aufweist, besonders bevorzugt eine Oberfläche, die aus Bindemittel bzw. dem elastifizierenden Zusatz besteht. Insbesondere bei Einsatz hygroskopischer Fasern, z. B. lignocellulosischer Fasern, wird angestrebt, so wenig Fasern wie möglich in der Oberfläche des Werkstoffs zu haben, um die Dickenquellung so weit wie möglich zu optimieren. Wasser in flüssiger Form oder auch z. B. als Luftfeuchtigkeit würde von den hygroskopischen Fasern aufgesogen und es käme in der Folge zu einer Quellung des Werkstoffs. Dies ist unerwünscht. Der hohe bzw. überwiegende Anteil an Bindemittel im plattenförmigen Werkstoff ermöglicht eine Oberfläche des Werkstoffs, die überwiegend oder vollständig Bindemittel un einen elastifizierenden Zusatz aufweist bzw. die kaum oder keine hygroskopischen Fasern aufweist.

Der erfindungsgemäße Werkstoff kann wie eine Holzwerkstoffplatte, z. B. wie eine HDF-Platte, bearbeitet werden. Die Oberfläche kann beschichtet, geprägt oder gefräst werden; die Kanten können profiliert werden, z. B. zur Herstellung von Fußbodenpaneelen. Der plattenförmige Werkstoff nach der Erfindung kann mit kunstharzgetränkten Papieren laminiert werden, er kann bedruckt, lackiert, lasiert oder in anderer Weise bearbeitet werden. Es ist als Vorteil dieser Erfindung anzusehen, dass der plattenförmige Werkstoff auf vorhandenen Vorrichtungen be- und verarbeitet werden kann.

Weiter gehört zur Offenbarung eine Vorrichtung zum Herstellen des vorstehend beschriebenen plattenförmigen Werkstoffs, aufweisend Mittel zum Beleimen von lignocellulosischen Fasern mit Bindemittel, die erfindungsgemäß über Mittel zum Beleimen von bereits vorbeleimten lignocellulosischen Fasern verfügt. Der Begriff "beleimen" meint hier das Auftragen von Bindemittel. Die Mittel zum Beleimen von Fasern sind vorteilhaft als Düsen ausgebildet, die einen Sprühnebel aus flüssig zugeführtem Bindemittel erzeugen. Durch den Sprühnebel aus Bindemittel werden Fasern geführt, auf denen sich dann Bindemitteltröpfchen des Sprühnebels ablagern. Bekannte Mittel zum Beleimen lignocellulosischer Fasern sind dazu ausgelegt, dass sie maximal 30 Gew.-% Bindemittel bezogen auf die zu beleimenden Fasern aufbringen. Das erfindungsgemäße Verfahren kann durchgeführt werden, indem die zu beleimenden Fasern die bekannten Mittel zum Beleimen mehrfach passieren, bis ausreichend Bindemittel auf die Fasern aufgetragen ist. Es wird jedoch vorgeschlagen, mehrere der bekannten Mittel zum Beleimen so anzuordnen, dass die zu beleimenden Fasern entlang einer Mehrzahl von Mitteln zum Beleimen gefördert werden, wobei jedes Mittel zum Beleimen eine Teilmenge des Bindemittels auf die lignocellulosischen Fasern aufträgt, bis die gewünschte Gesamtmenge von mindestens mehr als 50 Gew.-% des plattenförmigen Werkstoffs auf die Fasern aufgebracht ist. Es werden also zusätzlich zu den bekannten Mitteln zum Beleimen unbeleimter Fasern (Fasern ohne Bindemittel) weitere Mittel zum Beleimen vorbeleimter Fasern eingesetzt, auf die bereits eine Teilmenge des Bindemittels aufgebracht ist.

Der erfindungsgemäße plattenförmige Werkstoff kann durch unterschiedliche Kombinationen von Fasern, Bindemittel, Füllstoffen und ggf. anderen Additiven wie Wachsen an verschiedene Anforderungen angepasst werden. Es wird deshalb ausdrücklich darauf verwiesen, dass die vorstehend beschriebenen Merkmale jeweils frei miteinander kombiniert werden können.

Die Erfindung betrifft weiter die Verwendung des vorstehend beschriebenen plattenförmigen Werkstoffs. Es zeichnet den plattenförmigen Werkstoff nach der Erfindung aus, dass er wegen der minimalen Quellung, insbesondere der nahezu vollständig reduzierten Dickenquellung im Bereich der Kanten, vielfältig einsetzbar ist. Im Innenausbau kann der plattenförmige Werkstoff z. B. als Fußbodenplatte oder Fußbodenlaminat eingesetzt werden. Hier ist der Einsatz, anders als bei z. B. HDF-Fußbodenpaneelen, auch in Feucht- und Nassräumen möglich, weil das Kantenprofil, an dem der Plattenkern der Feuchtigkeit frei zugänglich ist, unter Einfluss von Wasser oder hoher Luftfeuchte nicht mehr signifikant quillt bzw. beim Trocknen schwindet. Eine Dickenquellung, die, bezogen auf die ursprüngliche Plattendicke, weniger als 3 %, bevorzugt weniger als 2 % beträgt, wird im Sinne der Erfindung als nicht-signifikant angesehen. Auf minimale Dickenquellung optimierte, erfindungsgemäße plattenförmige Werkstoffe weisen eine Dickenquellung gemäß DIN 317 bzw. eine Kantenquellung gemäß DIN 13329 von nur 0,5% bis 1% auf. Der erfindungsgemäße plattenförmige Werkstoff ist somit quellungsarm oder, bei erreichen einer maximalen Dickenquellung von bis zu 1% bezogen auf die ursprünglichen Plattendicke, quellungsfrei und formstabil. Damit kann z. B. auf bekannten Vorrichtungen zur Herstellung von Holzwerkstoffplatten nun ein plattenförmiger, im Wesentlichen nicht-quellender, gegenüber Wasser bzw. Luftfeuchtigkeit formstabiler Werkstoff hergestellt werden, der nicht auf schmale Formate begrenzt ist und der bevorzugt den Einsatz nachwachsender Rohstoffe maximiert.

Selbstverständlich kann der erfindungsgemäße plattenförmige Werkstoff auch als Wand- oder Deckenplatte, als Möbelplatte, insbesondere beim Ausbau von Feucht- und Nassräumen oder von Labor- und Technikräumen bzw. Werkstätten, aber nicht beschränkt darauf, eingesetzt werden. Im Außenbau bietet sich der erfindungsgemäße Werkstoff als Fassadenplatte oder zur Dacheindeckung an. Der erfindungsgemäße plattenförmige Werkstoff kann z. B. für den Terrassenbau einschließlich Terrassendielen oder Außenfußböden eingesetzt werden. Auf diese Weise wird es möglich, gleiche Fußböden bzw. Fußbodenbeläge für Innen- und angrenzende Außenbereiche (Terrassen, Balkone, Fassaden, Zuwegungen) einzusetzen. Bevorzugt kann der erfindungsgemäße plattenförmige Werkstoff für Konstruktionen, insbesondere Möbel, im Außenbereich eingesetzt werden. Der Ausbau von Werkstätten, Produktionshallen oder Stallungen kann z.B. ohne Weiteres mit dem erfindungsgemäßen Werkstoff erfolgen. Der plattenförmige Werkstoff kann optional als Paneel ausgebildet sein und bei Bedarf mit einem Profil an den Kanten versehen sein. Das Profil dient vorzugsweise zum Fixieren von zwei Paneelen aneinander. Zwei nebeneinander angeordnete Paneele können alternativ auch Stoß auf Stoß durch ein Doppelklebeband fixiert werden, das im Bereich seitlich einer Fuge zwischen den unmittelbar aneinander angrenzenden Paneelen angeordnet ist. Auch ein Verkleben von unmittelbar aneinander angrenzenden Paneelen oder Platten ist möglich, wobei bevorzugt ein wasserfester Klebstoff eingesetzt wird.

Der erfindungsgemäße plattenförmige Werkstoff weist gute Festigkeitseigenschaften, insbesondere eine hohe Querzugfestigkeit auf, die mindestens 2,5 N/mm2, bevorzugt bis zu 3 N/mm2, insbesondere bis zu 4 N/mm2 beträgt. Der erfindungsgemäße Werkstoff weist eine hohe Druckfestigkeit auf Aus den guten Festigkeitseigenschaften resultiert, dass zum Befestigen einer Platte aus dem erfindungsgemäßen Werkstoff weniger Befestigungsmittel, z. B. Schrauben, eingesetzt werden müssen, weil das einzelne Befestigungsmittel besseren Halt in der Platte hat. Die höhere Querzugfestigkeit erlaubt zudem eine intensivere Bearbeitung einer Platte aus dem erfindungsgemäßen Werkstoff, z. B. das Fräsen komplexer Profile in die Seitenkante einer Platte. So kann z.B. in die Seitenkante einer nur 4,3 mm dicken Platte ein komplexes Profil eingearbeitet werden, das zwei ineinandergreifende Platten sowohl in vertikaler als auch in horizontaler Richtung zueinander ausrichtet. Die hohe Druckfestigkeit ermöglicht eine hohe Punktbelastung des plattenförmigen Werkstoffs, so dass er sich z. B. für Ladeböden von Fahrzeugen oder als Boden für Lagerflächen eignet. Die hohe Biegesteifigkeit des plattenförmigen Werkstoffs lässt eine Verwendung als Konstruktionselement, z. B. Wandaussteifungen zu.

Details der Erfindung werden nachfolgend an Ausführungsbeispielen erläutert. Es zeigt:

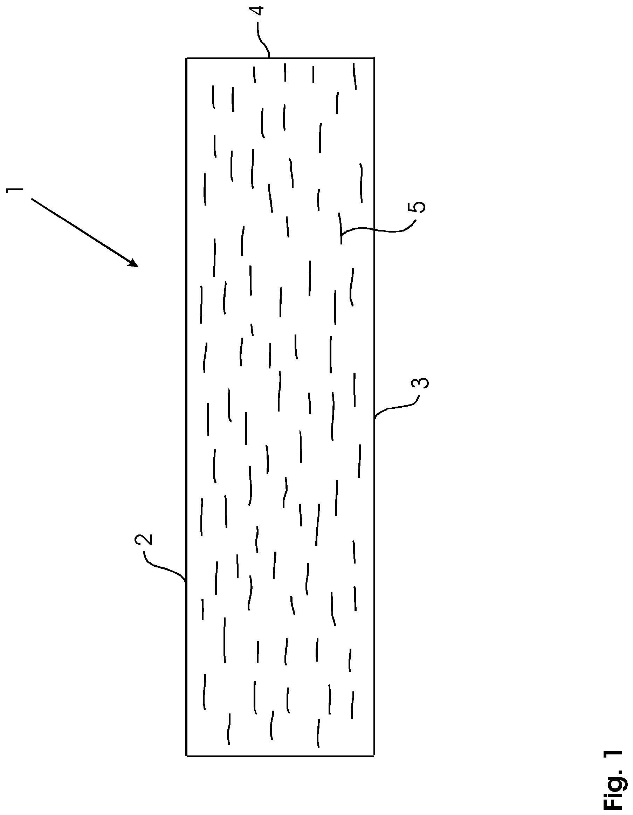

- Fig. 1: eine schematische Darstellung eines erfindungsgemäßen plattenförmigen Werkstoffs

Die Abbildung zeigt einen plattenförmigen Werkstoff 1 mit einer Oberseite 2 und einer Unterseite 3 sowie einer Kante 4. Der Werkstoff weist Fasern 5 auf, die in Bindemittel eingebettet sind. Der Anteil des Bindemittels beträgt mehr als 50 Gew.-% des plattenförmigen Werkstoffs. Es wird also mehr Bindemittel als Faser 5 eingesetzt. Als Fasern können natürliche, synthetische, organische und anorganische Fasern eingesetzt werden, sowohl einzeln als auch in Mischung. Auch hygroskopische Fasern wie z. B. Holz-, Cellulose- oder Leinenfasern können eingesetzt werden. Als Bindemittel wird bevorzugt Melamin eingesetzt, häufig in Kombination mit Formaldehyd oder Phenol aber auch in Mischung mit PMDI. Beispiele für Kombinationen von Fasern und Bindemittel werden nachfolgend beschrieben.

### Ausführungsbeispiel 1

Für den Versuch, dessen Ergebnisse nachfolgend in Tabelle 1 dargestellt sind, werden lignocellulosische Fasern, hier Nadelholzfasern, eingesetzt. Die Fasern wurden aus gedämpften Holzhackschnitzeln durch Zerfasern im Refiner hergestellt. Alternativ können beliebige andere lignocellulosische Fasern oder Gemische solcher Fasern eingesetzt werden. Die Nadelholzfasern werden mit einer Feuchte von 120% vor dem Beleimen eingesetzt; vor dem Verpressen werden sie mit dem darauf befindlichen Bindemittel auf eine Restfeuchte von 8% getrocknet, d. h., eine Tonne Fasern enthält 80 kg Wasser.

Für diesen Versuch werden mehr als 100 Gew.-%, vorliegend 108 Gew.-% Bindemittel bezogen auf atro Holz eingesetzt, hier ein Bindemittel aufweisend Melamin-Formaldehydharz (MF-Harz). Das im Bindemittel verwendete Melamin-Formaldehydharz (MF-Harz) hatte eine Feststoffkonzentration von 60% (gemessen bei 60 min/120°C). Somit wurden auf 100 Gramm atro Faserstoff (atro Holz) unter Berücksichtigung des Flüssigkeitsanteils 180 Gramm Bindemittel flüssig, enthaltend 108 g MF-Harz aufgetragen (108 g bei 60% Feststoffkonzentration = 180 g). "atro Holz" bezeichnet hier lignocellulosische Fasern, die bei 105°C bis zur Gewichtskonstanz getrocknet wurden. "atro Holz" ist ein übliches Referenzmaß für Rezepturen, die lignocellulosische Fasern enthalten. In den weiteren Ausführungsbeispielen wird auf den absoluten Einsatz des Bindemittels abgestellt.

Des Weiteren werden 1,2 Gew.-% Paraffin bezogen auf atro Holz eingesetzt.

Das Bindemittel wird in vier Durchgängen auf die lignocellulosischen Fasern aufgetragen, je Durchgang werden 27 Gew.-% auf die Fasern aufgebracht. Das flüssige Bindemittel wird in einer bekannten Vorrichtung zum Beleimen von Fasern durch Düsen versprüht. Der durch die Düsen erzeugte Sprühnebel schlägt sich auf der Oberfläche der Fasern nieder, die den Sprühnebel passieren, z. B. von oben nach unten durch den Sprühnebel aus Bindemittel fallen.

An die Vorrichtung zum Beleimen von Fasern schließt sich eine Trocknung der beleimten Fasern in Mitteln zum Trocknen an, z. B. ein Warmlufttunnel oder -schacht, der erhitzte Luft auf die Fasern aufbringt. Ziel des Trocknens ist nicht das vollständige Entfernen jeglicher Flüssigkeit, sondern das Trocknen des Bindemittels so weit, dass es nicht mehr klebt. Die Reaktivität des Bindemittels beim Aushärten unter Einwirkung von Druck und/oder Temperatur soll durch das Trocknen nicht beeinträchtigt werden.

Nach dem Trocknen können die Fasern gelagert oder weiter beleimt bzw. verarbeitet werden. Zunächst schließt sich ein zweiter Durchgang durch die Vorrichtung zum Beleimen an, bei dem erneut 27 Gew.-% MF-Harz auf die nach dem ersten Durchgang bereits vorbeleimten Fasern aufgesprüht werden. Auch nach dem zweiten Durchgang werden die beleimten Fasern getrocknet, bis sie nicht mehr aneinander haften bzw. kleben. In gleicher Weise wird ein dritter und vierter Durchgang durch die Vorrichtung zum Beleimen und die Mittel zum Trocknen durchgeführt. Alternativ können die 110 Gew.-% Bindemittel auch in ein oder zwei Durchgängen, alternativ auch in fünf oder mehr Durchgängen auf die Fasern aufgebracht werden. Die Menge des je Durchgang auf die Fasern aufgebrachten Bindemittels kann von Durchgang zu Durchgang variieren.

Nach jedem Durchgang wird ein Teil der beleimten Fasern abgenommen und zu einem plattenförmigen Werkstoff mit einer Dicke von 7 mm verarbeitet. Dies geschieht durch Streuen eines Faserkuchens, der in einer bekannten kontinuierlich arbeitenden Doppelbandpresse bei 180 °C und einem Druck von 2,5 N/mm² bei 15 s/mm Pressdauer verpresst wird. Die so erzeugte Platte weist eine Dicke von 5,5 mm und eine Dichte von 1050 kg/m³ auf. Als Referenz wird zum einen ein unter gleichen Bedingungen hergestellter, plattenförmiger Werkstoff ohne erhöhten Bindemittelzusatz geprüft (Tabelle 1, Durchgang o).

Der so hergestellte plattenförmige Werkstoff wird gemäß DIN 317 auf Quellung und gemäß DIN 13329 auf Kantenquellung geprüft. Die Dickenquellung wird an einer Kante des Werkstoffs als Veränderung in mm bezogen auf die Ausgangs-Dicke von 7 mm absolut und auch als relative Änderung (%) bestimmt.

**Tabelle 1 Dickenquellung für einen plattenförmigen Werkstoff, Dicke 7 mm, Bindemitteleinsatz steigend von 0 bis 108 Gew.-%**

| Durchgang Nr. | 0 | 1 | 2 | 3 | 4 |
|---|---|---|---|---|---|
| Differenz absolut (mm) | 1,47 | 0,50 | 0,25 | 0,21 | 0,12 |
| Differenz relativ (%) | 22,92 | 7,45 | 3,82 | 3,05 | 1,83 |

Bei dem plattenförmigen Werkstoff ohne Bindemittelzusatz (Durchgang 0) ist die Dickenquellung gemäß Tabelle 1 wie zu erwarten maximal bei annähernd 23%. Jeder Durchgang, in dem jeweils 27 Gew.-% MF-Harz aufgebracht werden, reduziert die Dickenquellung an der Kante des plattenförmigen Werkstoffs. Es wird ein außerordentlich niedriger Wert von 1,83% Kantenquellung erreicht, wenn 108 Gew.-% Bindemittel bezogen auf atro Holz eingesetzt werden.

### Ausführungsbeispiel 2

Für den Faseranteil des plattenförmigen Werkstoffs wird beim Ausführungsbeispiel 2 eine 50:50 Mischung aus unterschiedlichen Fasern, hier z. B. Holzfasern und Carbonfasern, alternativ z. B. Altpapierfasern und Glaswollfasern, alternativ Mineralfasern und Cellulosefasern eingesetzt. Die natürlichen Fasern (Holz-, Altpapier-, Cellulosefasern) werden hier vorzugsweise vor dem Beleimen getrocknet, die Fasern können vor oder nach dem Beleimen und dem optionalen Trocknen des Bindemittels gemischt werden. Beide Varianten erlauben das Herstellen eines homogenen Gemisches aus beleimten Fasern, die dann zu einem Faserkuchen gestreut werden können. Im Übrigen ist das Ausführungsbeispiel 2 hinsichtlich des Bindemitteleinsatzes und des Einsatzes von Paraffin identisch mit dem Ausführungsbeispiel 1.

### Ausführungsbeispiel 3

Ausführungsbeispiel 3 betrifft eine Mischung aus Fasern und Bindemittel, bei dem 50 Teile Polyethylenfasern und 20 Teile Carbonfasern und 10 Teile Zuschlagstoff, z. B. Glaspartikel, mineralische oder keramische Partikel den Faseranteil bilden, der mit 115 Gew.-% Bindemittel, hier z. B. mit MF-Harz, beleimt wird. Das Faser-Zuschlagstoff-Bindemittelgemisch wird im Übrigen behandelt wie im Ausführungsbeispiel 1.

### Ausführungsbeispiel 4

Hergestellt werden soll eine Platte aus Fasern und Bindemittel, die zur Herstellung eines Fußbodenbelags eingesetzt werden kann, die also insbesondere mit einer dekorativen Oberfläche beschichtet werden kann, insbesondere entweder mit kunstharzgetränkten Papieren oder durch Lackieren. Eingesetzt werden 40 Gew.-% Fasern mit einer Dichte von ca. 550 kg/m³ und 55 Gew.-% eines Bindemittels, hier eines MF-Harzes mit einem Melaminanteil von mehr als 60 %. Außerdem werden 5 Gew.-% andere Stoffe eingesetzt, hier 1,5 Gew.-% Paraffin und 3,5 Gew.-% Farbstoff "grau". Der Farbstoff wird eingesetzt, um dem plattenförmigen Werkstoff eine einheitliche Farbe zu verleihen.

Der plattenförmige Werkstoff mit der vorstehend genannten Zusammensetzung wird auf einer industriellen, kontinuierlichen Presse hergestellt und mit HDF-Platten verglichen, die aus demselben Fasermaterial, jedoch mit einem Bindemittelanteil von 15 Gew.-% hergestellt wurden, und die eine Dichte von 880 kg/m³ aufweisen.

**Tabelle 2 Vergleichsversuche zur Quellung einer HDF- und einer erfindungsgemäßen Platte**

| Versuch | Plattenstärke (mm) | Bindemittel (%) | Dichte (kg/m³) | Querzugfestigkeit (N/mm²) | Quellung Rohplatte (%) | Kantenquellung beschichtet (%) |
|---|---|---|---|---|---|---|
| Standard HDF | 6 | 15% | 880 | >1,4 | 18 - 22 | 14 - 18 |
| plattenförmiger Werkstoff | 5,8 | 137,5% | 1050 | >4,5 | 0,1-,03 | 1,0 - 1,2 |

Die vorstehende Tabelle 2 zeigt die beiden Platten im Vergleich, mit Angabe der Plattenstärke in mm als Bruttowert (vor dem Schleifen) und der Dichte in kg/m³. Die Platten wurden jeweils ausgewertet nach Querzugfestigkeit (DIN EN 319), Quellung (gemessen nach EN 317) und Kantenquellung (gemessen nach EN 13329).

Die erfindungsgemäße Platte lässt sich aufgrund des hohen Faseranteils stärker verdichten als eine Faserplatte. Der Bindemitteleinsatz ist um ca. das 9-fache höher als bei der HDF-Platte nach dem Stand der Technik. Der erfindungsgemäße plattenförmige Werkstoff weist eine um das Dreifache höhere Querzugfestigkeit und eine um den Faktor 100 reduzierte Quellung der Rohplatte auf. Nach dem Laminieren der Ober- und Unterseite wird die Kantquellung "beschichtet" gemessen. Nur noch die Kanten sind der Einwirkung von Wasser zugänglich, da die Ober- und Unterseite der Platte durch das Laminieren versiegelt und dem Wasser nicht mehr zugänglich sind. Dieser Test ist gerade für Fußbodenbeläge von besonderer Bedeutung, weil die Kanten der Fußbodenpaneele in der Regel nicht versiegelt werden können und so dem Wasser ausgesetzt sind. Hier zeigt sich eine auf ein Zehntel reduzierte Kantenquellung für den erfindungsgemäßen Plattenwerkstoff im Vergleich mit einer bekannten HDF-Platte. Beide, die HDF-Platte und der erfindungsgemäße plattenförmige Werkstoff, wurden auf denselben industriellen Produktionsanlagen hergestellt.

## Patentansprüche

1. Verfahren zum Herstellen eines plattenförmigen Werkstoffs, aufweisend lignocellulosische Fasern (5) und Bindemittel, wobei der Anteil des Bindemittels mit einem eingesetzten elastifizierenden Zusatz mehr als 50 Gew.-% an dem plattenförmigen Werkstoff (1) beträgt, wobei der elastifizierende Zusatz nicht als Hauptbestandteil des Bindemittels eingesetzt wird, mit den Schritten:
Bereitstellen von lignocellulosischen Fasern (5),
Bereitstellen des Bindemittels, bevorzugt in flüssiger Form, wobei das Bindemittel Melamin-Formaldehydharz, Phenolharz, Methylendiphenylisocyanat (MDI), auch in emulgierter Form als eMDI, polymeres Diphenylmethandiisocyanat (PMDI), Polyurethan oder Mischungen der vorgenannten Bindemittel sowie einen flüssigen elastifizierenden Zusatz aufweist,
Auftragen des Bindemittels mit dem elastifizierenden Zusatz auf die Fasern (5), Formen eines Faserkuchens aus den mit Bindemittel und mit dem elastifizierenden Zusatz versehenen Fasern,
Verpressen des Faserkuchens in einer Presse unter Aushärten des Bindemittels zum Erzeugen eines plattenförmigen Werkstoffs (1) mit einer Dichte von 1.000 kg/m³ bis 1.800 kg/m³.

2. Verfahren nach Anspruch 1, **dadurch gekennzeichnet, dass** als elastifizierender Zusatz des plattenförmigen Werkstoffs Acrylat, Styrolacrylat, Polyurethan, Polyvinylacetat, Ethyl-Vinyl-Acetat, Mono- oder Diethylenglykol zugesetzt werden.

3. Verfahren nach Anspruch 2, **dadurch gekennzeichnet, dass** der elastifizierende Zusatz als Feststoff bezogen auf den Feststoff des Bindemittels in einem Verhältnis von maximal 1:1, bevorzugt von 0,7:1, insbesondere von 0,2:1, vorteilhaft von mindestens 0,01:1 eingesetzt werden.

4. Verfahren nach Anspruch 2 oder 3, **dadurch gekennzeichnet, dass** der elastifizierende Zusatz vor oder nach dem Bindemittel auf die Fasern aufgetragen wird oder vor dem Auftragen auf die Fasern mit dem Bindemittel vermischt und dann auf die Fasern aufgetragen wird.

5. Verfahren nach einem der vorstehenden Ansprüche, **dadurch gekennzeichnet, dass** eine kontinuierliche oder eine diskontinuierliche Presse, insbesondere eine Heißpresse zum Herstellen des plattenförmigen Werkstoffs eingesetzt wird.

6. Verfahren nach einem der vorstehenden Ansprüche, **dadurch gekennzeichnet, dass** die Presstemperatur 140 C bis 220 °C, bevorzugt 160 °C bis 180 °C beträgt.

7. Verfahren nach einem der vorstehenden Ansprüche, **dadurch gekennzeichnet, dass** der Pressdruck 0,3 N/mm² bis 5,5 N/mm², bevorzugt 1 N/mm² bis 3 N/mm² beträgt.

8. Verfahren nach einem der vorstehenden Ansprüche, **dadurch gekennzeichnet**, das die Pressdauer 6 Sekunden /mm Plattendicke bis 60 Sekunden/mm Plattendicke, bevorzugt 10 Sekunden/mm Plattendicke bis 20 Sekunden/mm Plattendicke beträgt.

9. Verfahren nach einem der vorstehenden Ansprüche, **dadurch gekennzeichnet, dass** die Fasern nass, teilweise getrocknet oder trocken mit Bindemittel und optional mit dem Mittel zum Elastifizieren versehen werden, wobei beim Auftragen des Bindemittels und optional des Mittels zum Elastifizieren die Fasern bevorzugt nachfolgend getrocknet werden.

10. Plattenförmiger Werkstoff, hergestellt nach dem Verfahren gemäß einem der Ansprüche 1 bis 9 in einer Presse, aufweisend lignocellulosische Fasern (5) und Bindemittel, wobei das Bindemittel Melamin-Formaldehydharz, Phenolharz, Methylendiphenylisocyanat (MDI), auch in emulgierter Form als eMDI, polymeres Diphenylmethandiisocyanat (PMDI), Polyurethan oder Mischungen der vorgenannten Bindemittel aufweist, und wobei der Anteil des Bindemittels mit einem eingesetzten elastifizierenden Zusatz, mehr als 50 Gew.-% des plattenförmigen Werkstoffs (1) beträgt, der eine Dichte von 1.000 kg/m³ bis 1.800 kg/m³ aufweist.

11. Werkstoff nach Anspruch 10, **dadurch gekennzeichnet, dass** der Werkstoff (1) natürliche Fasern, synthetische Fasern, anorganische oder organische Fasern oder Mischungen von Fasern aufweist.

12. Werkstoff nach Anspruch 11, **dadurch gekennzeichnet, dass** die organischen, natürlichen Fasern lignocellulosischen Fasern aus nachwachsenden Rohstoffen umfassen, insbesondere Nadelholzfasern, Laubholzfasern, Fasern aus Einjahrespflanzen oder Bambusfasern.

13. Werkstoff nach Anspruch 11, **dadurch gekennzeichnet, dass** die synthetischen Fasern Fasern aus thermoplastischem Material umfassen, insbesondere Fasern aus Polyethylen oder Polypropylen, aber auch aus Polycarbonat, Polyacryl, Polymethacryl oder Polyurethan.

14. Werkstoff nach Anspruch 11, **dadurch gekennzeichnet, dass** die anorganischen Fasern Fasern aus mineralischen, keramischen oder glasförmigen Werkstoffen umfassen.

15. Werkstoff nach einem der vorstehenden Ansprüche 10 bis 14, **dadurch gekennzeichnet, dass** der Anteil an Bindemittel bezogen auf atro Holz mehr als 101 Gew.-%, mehr als 120 Gew.-%, mehr als 150 Gew.-%, oder mehr als 200 Gew.-% beträgt.

16. Werkstoff nach einem der vorstehenden Ansprüche 10 bis 15, **dadurch gekennzeichnet, dass** der plattenförmige Werkstoff (1) einen Zuschlagstoff aufweist, insbesondere nicht-hygroskopische oder nicht-quellende Füllstoffe.

17. Werkstoff nach Anspruch 16, **dadurch gekennzeichnet**, das als Zuschlagstoff mineralische, keramische, synthetische oder Glaspartikel eingesetzt sind.

18. Werkstoff nach einem der vorstehenden Ansprüche 10 bis 17, **dadurch gekennzeichnet, dass** der plattenförmige Werkstoff (1) Hydrophobierungsmittel aufweist, z. B. Paraffin oder Wachs.

19. Verwendung eines plattenförmigen Werkstoffs nach mindestens einem der Ansprüche 10 bis 18, **dadurch gekennzeichnet, dass** der plattenförmige Werkstoff (1) eingesetzt wird im Innenausbau, insbesondere als Fußbodenplatte oder Fußbodenlaminat, als Wand- oder Deckenplatte, als Möbelplatte, beim Ausbau von Feucht- und Nassräumen, im Außenbau als Fassadenplatte oder zur Dacheindeckung, für Stallungen, für Terrassenbau einschließlich Terrassendielen oder Außenfußböden und Konstruktionen, insbesondere Möbeln für den Außenbereich.

## Claims

1. A method for producing a planar material, comprising lignocellulosic fibers (5) and a binding agent, wherein the proportion of the binding agent with a used elasticizing additive is more than 50 wt% of the planar material (1), wherein the elasticizing additive is not used as the main component of the binder, having the steps of:
providing lignocellulosic fibers (5),
providing the binding agent, preferably in liquid form, wherein the binding agent comprises melamine-formaldehyde resin, phenolic resin, methylene diphenyl isocyanate (MDI), also in emulsified form as eMDI, polymeric diphenylmethane diisocyanate (PMDI), polyurethane, or mixtures of the aforementioned binding agents, as well as a liquid elasticizing additive,
applying the binding agent with the elasticizing additive to the fibers (5),
forming a fiber cake from the fibers provided with binding agent and the elasticizing additive,
pressing the fiber cake in a press while curing the binding agent to create a planar material (1) with a density of 1,000 kg/m³ to 1,800 kg/m³.

2. Method according to claim 1, **characterized in that** acrylate, styrene acrylate, polyurethane, polyvinyl acetate, ethylene vinyl acetate, mono- or diethylene glycol are added as the elasticizing additive of the planar material.

3. Method according to claim 2, **characterized in that** the elasticizing additive is used as a solid in a ratio of maximally 1:1, preferably 0.7:1, in particular 0.2:1, advantageously at least 0.01:1 in relation to the solid of the binding agent.

4. Method according to claim 2 or 3, **characterized in that** the elasticizing additive is applied to the fibers before or after the binding agent or is mixed with the binding agent before being applied to the fibers and is then applied to the fibers.

5. Method according to one of the preceding claims, **characterized in that** a continuous or a discontinuous press, in particular a hot press, is used for producing the planar material.

6. Method according to one of the preceding claims, **characterized in that** the pressing temperature is 140 °C to 220 °C, preferably 160 °C to 180 °C.

7. Method according to one of the preceding claims, **characterized in that** the pressing pressure is 0.3 N/mm² to 5.5 N/mm², preferably 1 N/mm² to 3 N/mm².

8. Method according to one of the preceding claims, **characterized in that** the pressing duration is 6 seconds/mm of board thickness to 60 seconds/mm of board thickness, preferably 10 seconds/mm of board thickness to 20 seconds/mm of board thickness.

9. Method according to one of the preceding claims, **characterized in that** the fibers are provided wet, partially dried or dry with binding agent and optionally with the agent for elasticizing, wherein, when applying the binding agent and optionally the agent for elasticizing, the fibers are preferably subsequently dried.

10. A planar material, produced according to the method according to one of claims 1 to 9 in a press, comprising lignocellulosic fibers (5) and the binding agent, wherein the binding agent comprises melamine-formaldehyde resin, phenolic resin, methylenediphenyl diisocyanate (MDI), also in emulsified form as eMDI, polymeric diphenylmethane diisocyanate (PMDI), polyurethane, or mixtures of the aforementioned binding agents and wherein the proportion of the binding agent with an used elasticizing additive is more than 50 wt% of the planar material (1), which has a density of 1,000 kg/m³ to 1,800 kg/m³.

11. Material according to claim 10, **characterized in that** the material (1) comprises natural fibers, synthetic fibers, inorganic or organic fibers, or mixtures of fibers.

12. Material according to claim 11, **characterized in that** the organic, natural fibers comprise lignocellulose fibers from renewable raw materials, in particular coniferous wood fibers, deciduous wood fibers, fibers from annual plants, or bamboo fibers.

13. Material according to claim 11, **characterized in that** the synthetic fibers comprise fibers made of thermoplastic material, in particular fibers made of polyethylene or polypropylene, but also made of polycarbonate, polyacrylic, polymethacrylic, or polyurethane.

14. Material according to claim 11, **characterized in that** the inorganic fibers comprise fibers made of mineral, ceramic, or glass materials.

15. Material according to one of the preceding claims 10 to 14, **characterized in that** the proportion of binding agent in relation to atro wood is more than 101 wt%, more than 120 wt%, more than 150 wt% or more than 200 wt%.

16. Material according to one of the preceding claims 10 to 15, **characterized in that** the planar material (1) has an aggregate, in particular non-hygroscopic or non-swelling fillers.

17. Material according to claim 16, **characterized in that** mineral, ceramic, synthetic, or glass particles are used as the aggregate.

18. Material according to one of the preceding claims 10 to 17, **characterized in that** the planar material (1) has hydrophobing agents, for example paraffin or wax.

19. A use of a planar material according to at least one of claims 10 to 18, **characterized in that** the planar material (1) is used in interior finishing, in particular as a floor board or floor laminate, as a wall or ceiling board, as a furniture board, when finishing damp and wet rooms, in outdoor construction as a facade board or for roofing, for stables, for terrace construction, including decking or outdoor flooring, and outdoor structures, in particular outdoor furniture.

## Revendications

1. Procédé de fabrication d'un matériau plan, comprenant des fibres lignocellulosiques (5) et un agent liant, dans lequel la proportion de l'agent liant avec un additif élastifiant utilisé est supérieure à 50 % en poids du matériau plan (1), dans lequel l'additif élastifiant n'est pas utilisé comme composant principal du liant, comprenant les étapes suivantes :
fournir des fibres lignocellulosiques (5),
fournir l'agent liant, de préférence sous forme liquide, dans lequel l'agent liant comprend une résine mélamine-formaldéhyde, une résine phénolique, du diisocyanate de méthylène diphényle (MDI), également sous forme émulsionnée comme eMDI, du diisocyanate de diphénylméthane polymère (PMDI), du polyuréthane ou des mélanges des agents liants susmentionnés, ainsi qu'un additif élastifiant liquide,
appliquer l'agent liant avec l'additif élastifiant sur les fibres (5),
former un gâteau de fibres à partir des fibres pourvues de l'agent liant et de l'-additif élastifiant,
pressage du gâteau de fibres dans une presse tout en durcissant l'agent liant pour créer un matériau plan (1) d'une densité comprise entre 1000 kg/m³ et 1800 kg/m³ .

2. Procédé selon la revendication 1, **caractérisé en ce que** de l'acrylate, du styrène-acrylate, du polyuréthane, du poly(acétate de vinyle), de l'éthylène-acétate de vinyle, du mono- ou diéthylène glycol sont ajoutés en tant qu'additif élastifiant au matériau plan.

3. Procédé selon la revendication 2, **caractérisé en ce que** l'additif élastifiant est utilisé sous forme solide dans un rapport maximal de 1:1, de préférence de 0,7:1, en particulier de 0,2:1, avantageusement d'au moins 0,01:1 par rapport à la matière solide du liant.

4. Procédé selon la revendication 2 ou 3, **caractérisé en ce que** l'additif élastifiant est appliqué sur les fibres avant ou après le liant ou est mélangé avec le liant avant d'être appliqué sur les fibres, puis est appliqué sur les fibres.

5. Procédé selon l'une des revendications précédentes, **caractérisé en ce qu'**une presse continue ou discontinue, en particulier une presse à chaud, est utilisée pour produire le matériau plan.

6. Procédé selon l'une des revendications précédentes, **caractérisé en ce que** la température de pressage est comprise entre 140 °C et 220 °C, de préférence entre 160 °C et 180 °C.

7. Procédé selon l'une des revendications précédentes, **caractérisé en ce que** la pression de pressage est comprise entre 0,3 N/mm² et 5,5 N/mm², de préférence entre 1 N/mm² et 3 N/mm².

8. Procédé selon l'une des revendications précédentes, **caractérisé en ce que** la durée de pressage est comprise entre 6 secondes/mm d'épaisseur de panneau et 60 secondes/mm d'épaisseur de panneau, de préférence entre 10 secondes/mm d'épaisseur de panneau et 20 secondes/mm d'épaisseur de panneau.

9. Procédé selon l'une des revendications précédentes, **caractérisé en ce que** les fibres sont fournies humides, partiellement séchées ou sèches avec un agent liant et éventuellement avec l'agent élastifiant, dans lequel, lors de l'application de l'agent liant et éventuellement de l'agent élastifiant, les fibres sont de préférence séchées par la suite.

10. Matériau plan, produit selon le procédé selon l'une des revendications 1 à 9 dans une presse, comprenant des fibres lignocellulosiques (5) et l'agent liant, dans lequel l'agent liant comprend une résine mélamine-formaldéhyde, une résine phénolique, du diisocyanate de méthylènediphényle (MDI), également sous forme émulsionnée comme eMDI, du diisocyanate de diphénylméthane polymère (PMDI), du polyuréthane ou des mélanges des agents liants susmentionnés, et dans lequel la proportion de l'agent liant avec un additif élastifiant utilisé est supérieure à 50 % en poids du matériau plan (1), qui a une densité de 1000 kg/m³ à 1800 kg/m³.

11. Matériau selon la revendication 10, **caractérisé en ce que** le matériau (1) comprend des fibres naturelles, des fibres synthétiques, des fibres inorganiques ou organiques, ou des mélanges de fibres.

12. Matériau selon la revendication 11, **caractérisé en ce que** les fibres organiques naturelles comprennent des fibres lignocellulosiques issues de matières premières renouvelables, en particulier des fibres de bois de conifères, des fibres de bois de feuillus, des fibres de plantes annuelles ou des fibres de bambou.

13. Matériau selon la revendication 11, **caractérisé en ce que** les fibres synthétiques comprennent des fibres en matière thermoplastique, en particulier des fibres en polyéthylène ou en polypropylène, mais également en polycarbonate, en poly-acrylique, en polyméthacrylique ou en polyuréthane.

14. Matériau selon la revendication 11, **caractérisé en ce que** les fibres inorganiques comprennent des fibres en matériaux minéraux, céramiques ou en verre.

15. Matériau selon l'une des revendications 10 à 14 précédentes, **caractérisé en ce que** la proportion d'agent liant par rapport au bois atro est supérieure à 101 % en poids, supérieure à 120 % en poids, supérieure à 150 % en poids ou supérieure à 200 % en poids.

16. Matériau selon l'une des revendications 10 à 15 précédentes, **caractérisé en ce que** le matériau plan (1) comporte un agrégat, en particulier des charges non hygroscopiques ou non gonflantes.

17. Matériau selon la revendication 16, **caractérisé en ce que** des particules minérales, céramiques, synthétiques ou de verre sont utilisées comme agrégat.

18. Matériau selon l'une des revendications 10 à 17 précédentes, **caractérisé en ce que** le matériau plan (1) contient des agents hydrophobes, par exemple de la paraffine ou de la cire.

19. Utilisation d'un matériau plan selon au moins l'une des revendications 10 à 18, **caractérisée en ce que** le matériau plan (1) est utilisé dans la finition intérieure, en particulier comme plancher de sol ou stratifié de sol, comme panneau mural ou de plafond, comme panneau de meuble, dans la finition de pièces humides et mouillées, dans la construction extérieure comme panneau de façade ou pour la couverture de toiture, pour les étables, pour la construction de terrasses, y compris les lames de terrasse ou les sols extérieurs et les constructions, en particulier les meubles pour l'extérieur.
